# EUROPEAN PATENT APPLICATION

(11) **EP 2 154 462 A1**
(43) Date of publication of application: **17.02.2010**
(21) Application number: 08275045.6
(22) Date of filing: 13.08.2008
(51) Int. Cl.: F28D 20/02, F28F 13/00

(54) **Latent heat storage body**

(71) Applicant: BAE Systems PLC, 6 Carlton Gardens London SW1Y 5AD (GB)
(72) Inventor: Chandler, Nicholas, Chelmsford, Essex CM2 8HN (GB); Todd, Murray James, Chelmsford, Essex CM2 8HN (GB); Eatly, David, Chelmsford, Essex CM2 8HN (GB)
(74) Representative: BAE SYSTEMS plc Group IP Department

(57) **Abstract**

A latent heat storage body is provided comprising one or more sections of an open cell structure, e.g. a metal foam, arranged within an enclosed body of wax. Heat supplied directly, or via a thermally conducting path, to the open cell metal sections within the wax is conducted very effectively into the body of wax to ensure even melting. Optionally, a latent heat storage body may comprise an enclosed volume of open cell metal foam that has been substantially filled with wax. Such a volume may take any required shape, for example to enclose a piece of equipment, or to form a heat-protective lid for example.

## Description

This invention relates to improved heat storage bodies and in particular, but not exclusively, to improvements to heat storage bodies that use phase change and other types of latent heat thermal storage material to store and subsequently release heat.

Phase change materials (PCMs) are examples of "latent heat" thermal storage materials (LHTSMs) in which the breaking and making of chemical bonds may be exploited to respectively store and release heat with little change in their temperature. It is known to use waxes, in particular, as the PCM in a heat storage body.

From a first aspect, the present invention resides in a heat storage body, comprising a volume of a latent heat thermal storage material in which one or more portions of an open cell thermally conducting structure are arranged to distribute heat within the thermal storage material heat storage body.

Insertion of an open cell structure made from a material with good thermal conductivity into a body of a latent heat thermal storage material (LHTSM), such as wax, has been found to have particular advantages in that the large surface area in contact with and distributed through the LHTSM improves the distribution of heat through the LHTSM and, in the case of wax, melts the wax more evenly and reduces temperature gradients that may arise in prior art arrangements due to the low thermal conductivity and high specific heat capacity of wax.

Preferably, the heat storage body comprises a container for enclosing the volume of LHTSM and the one or more portions of an open cell structure are thermally coupled to one or more walls of the container. This ensures that heat supplied to the heat storage body may be transferred more effectively into and out of the LHTSM.

In a preferred embodiment, the one or more portions of an open cell structure occupy substantially all of the enclosed space within the container such that the phase change material occupies only the spaces within the cells of the open cell structure. In substantially filling the container with the open cell structure, the greatest volume of wax is in thermal contact with the open cell structure, so maximising the rate of transfer of heat from the open cell structure to the LHTSM, and vice versa during cooling of the heat storage body. In comparison with a container having voids surrounding the one or more portions of the open cell structure, the ratio in the volume of LHTSM to open cell material is reduced, but the improved rate of heat transfer may be more useful in certain applications. If the container material is thermally conductive, open cell material may be omitted from some volume of the LHTSM adjacent to the walls and floor of the container.

Preferably, the shape of the container is arranged to correspond to that of a heat-producing component to be cooled. A particular advantage in using an open cell structure, particularly one with a largely homogeneous structure, is that it can be cut to any desired shape to fit closely to a heat-producing component, or merely to occupy a limited available space. In a preferred variant, the container is arranged to at least partially enclose a heat-producing component to be cooled, an electric motor for example, or to have a dual role as a structural component and a heat storage body.

In certain applications it is preferred that the heat storage body is detachable from a heat-producing component to be cooled. This may be important where the capacity of a heat storage body is insufficient for longer term operation of a piece of equipment or where the equipment has closely spaced operation cycles leaving insufficient time for the heat storage body to reset, e.g. for a wax body to solidify between meltings.

The open cell structure may comprise an open cell foam, or another form of 3-dimensional (3-D) matrix structure, whether regular or irregular in form, comprising cellular regions within it. Such structures may include a grid structure of rods or wires. The open cell structure may be made from any suitable but preferably highly thermally conducting material. Examples include metals such as aluminium and copper, or non-metallic conductors such as oriented graphite (including items made using nanotechnology processes), ceramics or other refractory materials.

Suitable LHTSMs include PCMs such as wax which may be selected for a particular melting temperature, according to the application. For some applications a PCM which uses phase changes between liquid and gas rather than between solid and liquid may be used, but these will create a significant pressure within the container. However, besides PCMs, other types of material are known to have a fully regenerative cooling capability which may be exploited to form a heat storage body in preferred embodiments of the present invention. Such materials include solids such as metal hydrides in which the latent heat of absorption and desorption of hydrogen by various metal alloy pairs may be used to provide such a regenerative heat storage body. Inclusion in a heat storage body of an open cell highly thermally conducting material structure, for example a foam structure comprising metal hydrides, is likely to provide improved performance in all preferred embodiments of the present invention.

Preferred embodiments of the present invention will now be described in more detail, by way of example only, with reference to the accompanying drawings, of which:
Figure 1 provides a plan view and a cross-sectional view of a heat storage body according to a first embodiment of the present invention;
Figure 2 shows a perspective view of a heat storage body linked to heat-generating components to be cooled by means of a high thermal conductivity material, according to a second embodiment of the present invention; and
Figure 3 shows a heat storage body in the form of an exchangeable lid to a motorised vehicle according to a third embodiment of the present invention.

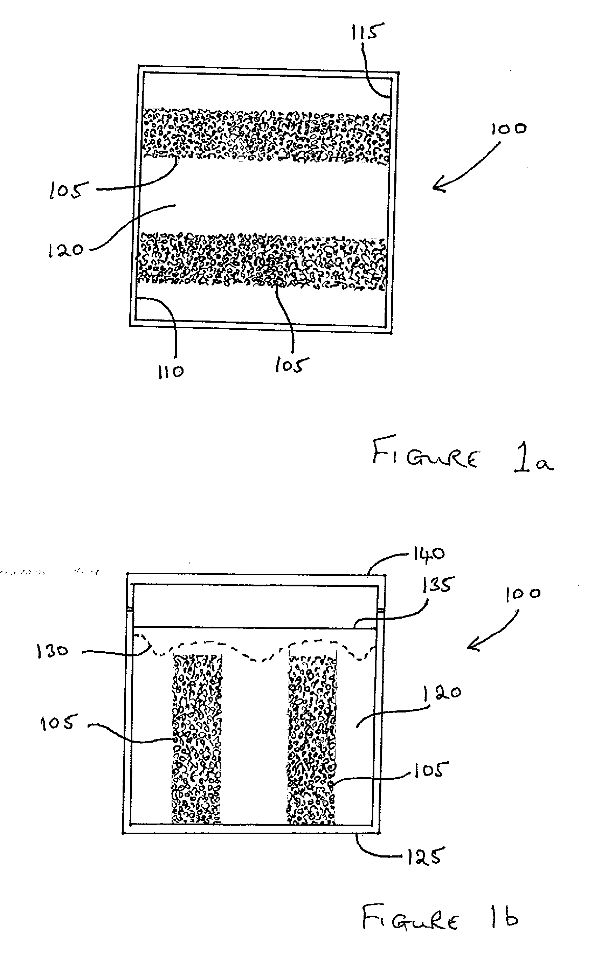

An improved heat storage body using wax as the LHTSM, wax being a particular example of a phase change material (PCM), and an open cell aluminium foam structure, will firstly be described with reference to Figure 1, according to a first preferred embodiment of the present invention.

Referring to Figure 1a and to Figure 1b, a plan view and a cross-sectional view, respectively, are provided through a heat storage body comprising a die cast aluminium box 100 with two pieces of open cell aluminium foam 105 positioned inside the box 100, thermally linked by physical contact with and preferably bonded using a thermally conducting material, silver-loaded epoxy resin, for example, to the inside surfaces of two of the walls 110, 115 and to the base 125 of the box 100. A selected phase change material (PCM) 120, in this example a wax as supplied by Rubitherm® or Logitech®, at least partially fills the box 100.

The open cell foam pieces 105 have been found to act as efficient heat spreaders within the body of wax 120 to carry heat from the walls 110, 115 and the base 125 of the box 100 and to distribute it through the wax 120. This is enabled in particular by the large surface area of the open cell foam in contact with wax 120. The wax 120 fills not only the space between the open cell foam pieces 105, but also the open spaces within the open cell foam 105 itself, providing a more efficient and effective transfer of supplied heat into the wax and hence a more even melting of the wax. A protective lid 140 to the box 100 is also provided.

In its solid state, the surface of the wax tends to adopt an irregular profile 130 in the box 100. However, when melted, the wax surface profile 135 is generally more even.

The size of the open cell metal foam sections 105 may be increased in volume as a proportion of the volume of the box 100 to the point where they are in contact with all the walls of the box 100 and wax occupies only the spaces within the open cell foam. This arrangement maximises the surface area of metal foam in direct contact with wax and as a consequence the rate of transfer of heat conducted through the metal foam to the wax and, upon cooling, from the wax to the metal foam is substantially maximised. This feature may be of particular importance in certain applications where a rapid transfer of heat is required to meet short term increases in heat output, or to enable more rapid recycling of the heat storage body. However, in an arrangement in which the internal space with the box 100 is occupied by metal foam, the total volume of wax in the heat storage body is reduced in proportion to the volume of metal and consequently the total heat storage capacity of the body may be reduced in comparison with an arrangement such as that shown in Figure 1 in which only a proportion of the internal volume of the box is occupied by foam.

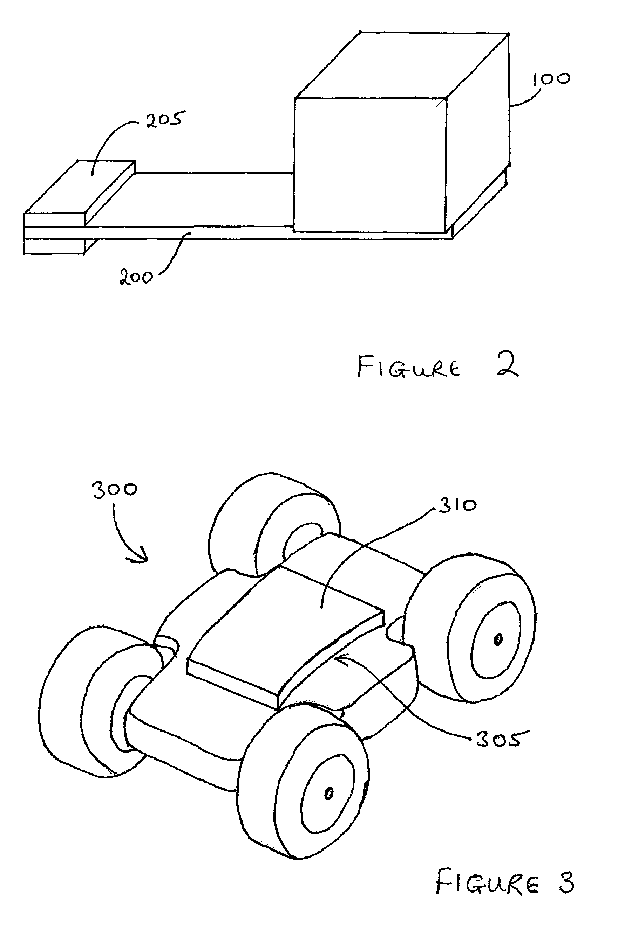

Heat-producing components may be mounted directly onto the walls of the heat storage body if convenient, in particular onto one or more of those walls in thermal contact with a section of open cell foam within the body to improve heat transfer from the component to the wax. However, where the heat storage body needs to be located separately from the components to be cooled, a highly thermally conductive pathway may be provided to attach to the base 125 of the heat storage body 100 to carry heat from a heat-producing component at a rate sufficiently high to melt the wax 120 in the heat storage body 100. Such an arrangement is shown in Figure 2, according to a second preferred embodiment of the present invention.

Referring to Figure 2, a heat storage body 100 of the type described above is attached to one end of a good thermal conductor 200 such as a plate containing anisotropic graphite. Heat producing components 205 are mounted, using a thermally conductive paste such as a silver-loaded epoxy resin, on another part of the thermal conductor 200 so that heat produced by them may be transferred through the thermal conductor 200 to the heat storage body 100, in order to achieve a temperature at the heat storage body 100 sufficiently high to melt wax within it. The thermal conductivity of anisotropic graphite, in particular, has been shown to be sufficiently high to enable it to be effective in such a role. The anisotropic graphite may be encapsulated in metal such as aluminium or a polymer such as polyimide and may be planar or non-planar in form, to suit the application.

Of course, the simple configuration shown in Figure 2 may be arranged in a number of different ways according to where the heat producing components 205 are located in relation to the heat storage body 100. For example, the heat storage body 100 may be mounted on a central part of a planar or non-planar thermal conductor and heat-producing components 205 may be mounted on either side of the heat storage body 100.

In a typical implementation of a heat storage body 100 as described above with reference to Figure 1, a die cast aluminium box of dimensions 105mm square and 70mm tall contains sufficient wax to store heat equivalent to 35 Watt-hours while remaining within the effective upper operating temperature limit of the chosen wax.

In certain applications, it is essential to locate the heat storage body in close proximity with the equipment to be cooled. The nature of open cell foam, particularly when made using a metal such as aluminium or copper, enables a heat storage body according to the present invention to be formed in any desired three dimensional shape to fit close to or, for example, to at least partially enclose a heat-producing component. Such a heat storage body may be entirely filled with open cell foam of a chosen thermally conductive material, or it may be only partially filled with such foam to enable the proportion of PCM, e.g. wax, to be increased. However, more complex shapes may often be more easily implemented by cutting the required shape from a block of open cell foam and then cladding it as required to contain the PCM.

In one preferred application of a heat storage body according to the present invention, a heat storage body is provided in the form of an exchangeable lid for use in cooling a piece of motorised equipment likely to be operational in high temperature conditions for relatively short periods of time. This particular application will now be described with reference to Figure 3, according to a third preferred embodiment of the present invention.

Referring to Figure 3, a simplified representation of a motorised vehicle 300 is shown. The vehicle 300 carries within it a number of high power electrical and electronic components within an electronics bay 305 which need to be cooled during the operational activity of the vehicle. The vehicle 300 is also designed to operate in high temperature environments in which more conventional cooling arrangements are likely to be less effective and a supplementary cooling facility is required.

A detachable lid 310 is provided, of the size and shape required to act as a lid to the electronics bay 305, comprising an aluminium clad section of open cell aluminium foam, shaped according to the requirements of the lid 310, that contains wax. Sources of heat within the electronics bay 305 may be thermally coupled to the lid 310 as required for cooling from inside the electronics bay 305. However, the lid 310 may also absorb heat from the external environment so as to reduce or delay any heating effect on the electronics bay 305 from external heat sources. Being detachable, the lid 310 may be quickly and easily replaced at intervals with a regenerated lid 310 to minimise breaks in operation of the vehicle.

Of course further heat storage bodies of appropriate shapes and sizes, whether detachable or fixed, may be applied to assist in the cooling of components in the vehicle 300, for example of the motors and other heat-producing parts. Highly thermally conductive materials may be used, as described above with reference to Figure 2, to channel heat to those heat storage bodies, including the lid 310.

It would be apparent to a person of ordinary skill in the relevant art that a heat storage body according to the present invention, making use of an open cell structure of highly thermally conducting material to improve the transfer of heat into and out of the phase change or other latent heat material, may be made in any appropriate three dimensional shape and in any required size according to the particular thermal management and physical requirements of a piece of equipment to be cooled or protected from heat.

Examples of an open cell structure may include open cell foams of various cell densities and regular or irregular 3-D matrix structures such as grids of various types, e.g. of rods and/or of wires, that provide a relatively large surface in contact with the LHTSM, as would be apparent to a person of ordinary skill in the relevant art.

## Claims

1. A heat storage body, comprising a volume of a latent heat thermal storage material in which one or more portions of an open cell thermally conducting structure are arranged to distribute heat within the thermal storage material.

2. The heat storage body according to claim 1, wherein the heat storage body comprises a container for enclosing said volume of latent heat thermal storage material and wherein said one or more portions of and open cell structure are thermally coupled to one or more walls of the container.

3. The heat storage body according to claim 2, wherein said one or more portions of an open cell structure occupy substantially all of the enclosed space within the container such that the latent heat thermal storage material occupies only spaces within the cells of said open cell structure.

4. The heat storage body according to claim 3, wherein the shape of the container is arranged to correspond to that of a heat-producing component to be cooled.

5. The heat storage body according to claim 4, wherein the container is arranged to at least partially enclose a heat-producing component to be cooled.

6. The heat storage body according to any one of the preceding claims, wherein the heat storage body is detachable from a heat-producing component to be cooled.

7. The heat storage body according to claim 6, wherein the heat storage body comprises a lid or other thermally protective cover.

8. The heat storage body according to any one of the preceding claims, wherein the latent heat thermal storage material is a phase change material, in particular wax.

9. The heat storage body according to any one of the preceding claims, wherein the thermally conductive material is a metal.

10. The heat storage body according to claim 2, wherein the container for the latent heat thermal storage material is thermal conductor.

11. The heat storage body according to any one of the preceding claims, wherein said open cell structure comprises an open cell foam.

12. The heat storage body according to any one claims 1 to 10, wherein said open cell structure comprises a 3-D matrix structure.

13. The heat storage body according to claim 12, wherein said 3-D matrix structure comprises a mesh structure.
